# EUROPÄISCHE PATENTSCHRIFT

(11) **EP 3 434 922 B1**
(45) Veröffentlichungstag und Bekanntmachung des Hinweises auf die Patenterteilung: **26.02.2020**
(21) Anmeldenummer: 18182817.9
(22) Anmeldetag: 11.07.2018
(51) Int. Cl.: F16D 3/18

(54) **WELLENKUPPLUNG SOWIE ANTRIEBSSTRANG FÜR EINEN HASPEL MIT EINER DERARTIGEN WELLENKUPPLUNG**
SHAFT COUPLING AND DRIVE TRAIN FOR A REEL WITH SUCH A SHAFT COUPLING
ACCOUPLEMENT D'ARBRE AINSI QUE CHAÎNE CINÉMATIQUE POUR UNE BOBINEUSE DOTÉE D'UN TEL ACCOUPLEMENT D'ARBRE

(30) Priorität: 24.07.2017 DE 202017104397 U
(43) Veröffentlichungstag der Anmeldung: 30.01.2019
(73) Patentinhaber: Achenbach Buschhütten GmbH & Co. KG, 57223 Kreuztal (DE)
(72) Erfinder: Barten, Axel, 57223 Kreuztal (DE); Schlag, Harald, 57223 Kreuztal (DE)
(74) Vertreter: advotec.

(56) Entgegenhaltungen:
- DE-B- 1 208 125
- JP-Y1- S4 827 296

## Beschreibung

Die vorliegende Erfindung betrifft eine Wellenkupplung zur Übertragung eines Drehmoments von einer Antriebswelle auf eine Abtriebswelle, wobei die Abtriebswelle zumindest einen hydraulischen Verbraucher aufweist, der über eine Drehzuführung mit Hydraulikflüssigkeit versorgt wird, wobei ein Stator der Drehzuführung zumindest einen Druckanschluss zur Verbindung mit einer externen Hydraulikleitung aufweist und ein Rotor der Drehzuführung zumindest einen Anschluss für eine innerhalb der Abtriebswelle ausgebildete Fluidleitungsanordnung zur Verbindung mit dem Verbraucher aufweist, und zur Verbindung der externen Hydraulikleitung mit der Fluidleitungsanordnung zwischen dem Stator und dem Rotor zumindest ein Ringkanal ausgebildet ist. Des Weiteren betrifft die Erfindung einen Antriebsstrang für einen Haspel, der mit einer derartigen Wellenkupplung versehen ist.

Aus der DE 196 21 171 A1 ist ein direkt angetriebener Haspel bekannt, der eine durch einen Motor angetriebene Antriebswelle zusammen mit der Haspelwelle in einem gemeinsamen Antriebsstrang aufweist. Hierzu sind die Antriebswelle des Motors und die Haspelwelle auf einer gemeinsamen Achse angeordnet und werden über eine Wellenkupplung axial miteinander verbunden. Zur Versorgung der Haspelwelle mit Hydraulikflüssigkeit, die zum Betrieb einer in der Haspelwelle angeordneten Kolbenzylindereinheit dient, mit der eine radial wirkende, auf der Haspelwelle angeordnete Spreizeinrichtung betätigt wird, ist auf einem mit der Wellenkupplung axial verbundenen Wellenansatz der Haspelwelle eine Drehzuführung vorgesehen. Die Drehzuführung ermöglicht den radialen Anschluss von externen Hydraulikleitungen an innerhalb der Haspelwelle ausgebildeten internen Hydraulikleitungen, die zusammen mit der Haspelwelle rotieren.

Die aus der DE 196 21 171 A1 bekannte Wellenkupplung ist unabhängig von der Drehzuführung ausgebildet, welche mit ihrem Rotor auf dem zur Anordnung der Drehzuführung im Antriebsstrang erforderlichen Wellenansatz der Haspelwelle angeordnet ist. Aufgrund des für die Anordnung der Drehzuführung im Antriebsstrang notwendigen Wellenansatzes der Haspelwelle ergibt sich eine entsprechende Verlängerung des Antriebsstrangs.

Aus der DE 12 08 125 B ist eine Wellenkupplung bekannt, die eine Drehzuführung aufweist, wobei ein die Antriebswelle mit der Abtriebswelle verbindender Rotor der Wellenkupplung einen Schmiermittelraum ausbildet, der zur Versorgung von innerhalb des Rotors und zwischen dem Rotor und dem Stator ausgebildeten Schmierstellen dient.

Die JP S48 27296 Y1 zeigt eine Wellenkupplung, bei der die Drehmomentübertragung von einer Antriebswelle auf eine Abtriebswelle jeweils über einen Eingriff zwischen einem Flanschteil der Kupplung und einer auf der Antriebswelle bzw. der Abtriebswelle angeordneten Hülse erfolgt.

Aufgabe der vorliegenden Erfindung ist es, eine vergleichsweise kürzere Ausbildung des Antriebsstrangs zu ermöglichen.

Zur Lösung der vorgenannten Aufgabe weist die erfindungsgemäße Wellenkupplung die Merkmale des Anspruchs 1 auf.

Erfindungsgemäß weist die Wellenkupplung den Rotor der Drehzuführung als Bestandteil auf, so dass der Rotor der Drehzuführung nicht nur, wie es beim Stand der Technik der Fall ist, zur Herstellung einer Hydraulikverbindung zwischen einer externen Hydraulikleitung und einer internen Hydraulikleitung dient, sondern vielmehr auch zur Drehmomentübertragung zwischen der Antriebswelle und der Abtriebswelle.

Die erfindungsgemäß ausgebildete Wellenkupplung eignet sich insbesondere zur Ausbildung eines Antriebsstrangs für einen Haspel, bei dem eine Antriebswelle eines Antriebsmotors mit der durch die Haspelwelle gebildeten Abtriebswelle verbunden ist.

Vorzugsweise bildet der Rotor ein Verbindungsstück zwischen einer ersten, mit der Antriebswelle verbundenen Kupplungshälfte und einer zweiten, mit der Abtriebswelle verbundenen Kupplungshälfte, so dass das Verbindungsstück, also der Rotor, unabhängig von der Ausgestaltung eines Wellenendes der Antriebswelle bzw. eines Wellenendes der Abtriebwelle unverändert ausgebildet sein kann und Anpassungen an die Ausgestaltung der Wellenenden lediglich durch entsprechende Ausgestaltung der Kupplungshälften vorgenommen werden können.

Besonders vorteilhaft ist es, wenn der Rotor lösbar mit den Kupplungshälften verbunden ist, so dass für eine Integration der Wellenkupplung in unterschiedliche Antriebsstränge lediglich ein Austausch der Kupplungshälften notwendig ist.

Wenn die Kupplungshälften jeweils ein Flanschteil zur Verbindung mit dem Rotor und ein Hülsenteil zur Verbindung mit der Antriebswelle bzw. der Abtriebswelle aufweisen, kann der Aufwand einer Anpassung der Wellenkupplung an den jeweiligen Antriebsstrang noch weiter reduziert werden, da lediglich noch eine Anpassung der Hülsenteile der Kupplungshälften an die Wellenenden der Antriebswelle und der Abtriebswelle notwendig ist.

Besonders bevorzugt ist es, wenn die Hülsenteile mit einer Innenverzahnung versehen sind, die zur Drehmomentübertragung mit einer Außenverzahnung einer auf der Abtriebswelle bzw. der Antriebswelle angeordneten Wellennabe zusammenwirkt, so dass axiale Verlagerungen der Wellenkupplung innerhalb des Antriebsstrangs möglich sind, ohne dass hierdurch die Drehmomentübertragung beeinträchtigt wird.

Vorzugsweise sind dabei die Innenverzahnung und die Außenverzahnung als Bogenverzahnung ausgebildet, so dass zusätzlich zu der axialen Verschiebbarkeit der Wellenkupplung im Antriebsstrang auch ein Ausgleich eines Winkelversatzes zwischen der Antriebswelle und der Abtriebswelle ermöglicht wird.

Wenn die Flanschteile und die Hülsenteile lösbar miteinander verbunden sind, kann eine erleichterte Montage bzw. Demontage der Wellenkupplung erfolgen, bei der die Hülsenteile der Kupplungshälften auf den Wellenenden der Antriebswelle und der Abtriebswelle verbleiben können und die Drehzuführung, deren Rotor das Verbindungsstück zwischen den Kupplungshälften ausbildet, unabhängig von den Kupplungshälften in den Antriebsstrang integriert bzw. aus dem Antriebsstrang entfernt werden kann.

Wenn die Flanschteile darüber hinaus mindestens zwei radial trennbare und lösbar miteinander verbundene Flanschsegmente aufweisen, ist eine radiale Entfernung der Flanschteile aus dem Antriebsstrang möglich, ohne dass die Fluidverbindung zwischen der externen Hydraulikleitung und der internen Hydraulikleitung getrennt werden müsste.

Besonders vorteilhaft ist es, wenn der Rotor zur Herstellung einer Hydraulikverbindung mit dem in der Abtriebswelle angeordneten Verbraucher zumindest ein Rotorleitungsstück aufweist, das an die innerhalb der Abtriebswelle ausgebildete Fluidleitungsanordnung angeschlossen ist, so dass insbesondere nach Entfernung der Flanschteile aus dem Antriebsstrang eine einfache Trennung der Hydraulikverbindung zwischen dem in der Abtriebswelle angeordneten hydraulischen Verbraucher und der externen Hydraulikleitung möglich ist.

Vorzugsweise ist das Rotorleitungsstück als flexible Leitung ausgebildet, so dass ein Winkelversatz zwischen der Antriebswelle und der Abtriebswelle ohne Beeinträchtigung der Hydraulikverbindung möglich ist.

Wenn der Rotor als Rotorhülse ausgebildet ist, kann der überwiegende Teil des Querschnitts des Rotors zur Unterbringung des Rotorleitungsstücks genutzt werden, so dass insbesondere Rohrleitungsbögen mit großem Radius innerhalb des Rotors ausgebildet werden können.

Zur Lösung der Aufgabenstellung weist der erfindungsgemäße Antriebsstrang die Merkmale des Anspruchs 11 auf.

Der erfindungsgemäße Antriebsstrang ist mit einer erfindungsgemäßen Wellenkupplung versehen und in besonderer Weise zum Antrieb eines Haspels zum Aufwickeln und Abwickeln von bandförmigem Material auf einen mittels einer Antriebswelle antreibbaren Haspeldorn geeignet.

Der erfindungsgemäße Antriebsstrang ermöglicht neben einer verkürzten Ausgestaltung eine einfache und schnelle Wartung der Wellenkupplung und der Drehzuführung.

Nachfolgend wird eine bevorzugte Ausführungsform der Erfindung anhand der Zeichnung näher erläutert.

Es zeigen:
- **Fig. 1**: einen Antriebsstrang eines Haspels zum Aufwickeln und Abwickeln von bandförmigem Material auf einen Haspeldorn;
- **Fig. 2**: eine Teildarstellung des in **Fig. 1** dargestellten Antriebsstrangs mit einer zwischen einer Antriebswelle und einer Haspelwelle angeordneten Wellenkupplung mit integrierter Drehzuführung;
- **Fig. 3**: die in **Fig. 2** dargestellte Wellenkupplung in einer Demontage-Konfiguration mit demontierten Kupplungshälften;
- **Fig. 4**: einen aus zwei Flanschsegmenten zusammengesetzten Flanschteil einer Kupplungshälfte;
- **Fig. 5**: die in den **Fig. 2** und **3** dargestellte Drehzuführung in einer Entnahmeposition zur Entnahme aus dem Antriebsstrang.

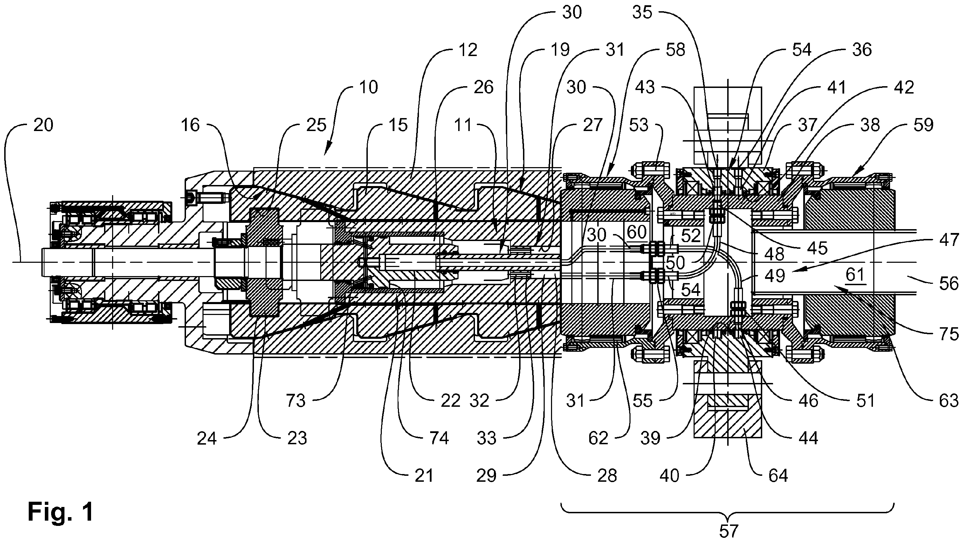

**Fig. 1** zeigt einen Haspeldorn 10 mit einer als Abtriebswelle 11 eines eine Antriebswelle 56 sowie eine Wellenkupplung 57 umfassenden Antriebsstrangs 75 ausgebildeten Haspelwelle, die mit mehreren über den Umfang verteilten Spreizsegmenten 12 versehen ist, welche zur Drehmomentübertragung auf ein hier nicht näher dargestelltes Coil dienen.

Wie ferner aus der **Fig. 1** zu ersehen ist, sind die Spreizsegmente 12 jeweils auf einer Spreizleiste 15 angeordnet. Die Spreizsegmente 12 sind auf ihrer Innenseite mit einer Keilflächenanordnung 16 versehen, die mit einer auf einer Außenseite der Spreizleisten 15 ausgebildeten Keilflächenanordnung 19 derart zusammenwirkt, dass bei einer bezugnehmend auf die **Fig. 1** nach rechts gerichteten axialen Verschiebung der Spreizleisten 15 auf der als Abtriebswelle 11 ausgebildeten Haspelwelle die Spreizsegmente 12 radial nach außen bewegt werden, um radiale Vorspannkräfte auf ein auf dem Haspeldorn angeordnetes Coil zu übertragen und so die Drehmomentübertragung vom Haspeldorn 10 auf das Coil zu ermöglichen.

Zur Ausführung der axialen Verschiebung der Spreizleisten 15 auf der Abtriebswelle 11 ist auf einer Mittelachse 20 eine Kolben-Zylinder-Einheit 21 vorgesehen mit einem Kolben 22, der über einen mit dem Kolben 22 verbundenen Mitnehmer 23 eine axiale Bewegung des Kolbens 22 auf die Spreizleisten 15 überträgt. Im Fall des dargestellten Ausführungsbeispiels ist der Mitnehmer 23 scheibenförmig ausgebildet und greift mit seinem Umfangsrand 24 in am linken axialen Ende der Spreizleisten 15 ausgebildete Nuten 25 ein.

Wie **Fig.1** zeigt, ist der Kolben 22 der Kolben-Zylinder-Einheit 21 in einem im Bereich des linken Wellenendes 51 der Haspelwelle 11 ausgebildeten Zylinderraum 26 angeordnet, wobei der Zylinderraum 26 durch einen Bohrungsabschnitt einer sich durch die Abtriebswelle 11 erstreckenden axialen Bohrung 28 gebildet ist.

Zum Anschluss an eine Druckmittelversorgung ist die Kolben-Zylinder-Einheit 21 mit einer koaxialen Fluidleitungsanordnung 29 verbunden, die zur Ausbildung eines Innenkanals ein in die axiale Bohrung 28 zentral eingesetztes Kanalrohr 30 und einen konzentrisch zum Innenkanal angeordneten Außenkanal aufweist, der durch einen zwischen dem Kanalrohr 30 und einer Bohrungswand 27 der axialen Bohrung 28 gebildeten Ringkanal 31 gebildet ist. Zur definierten zentralen Anordnung des Kanalrohrs 30 ist das Kanalrohr 30 in Stützhülsen 32 gelagert, die sich mit ihrem äußeren Umfang an der Bohrungswand 27 der axialen Bohrung 28 abstützen und Durchflussbohrungen 33 für eine Druckmitteldurchströmung aufweisen.

Zum Betrieb des doppelt wirkenden Kolbens 22 erfolgt eine Druckmittelbeaufschlagung des Kolbens 22 über ein Druckmittel, das, wie in **Fig. 1** dargestellt, mittels einer an dem der Kolben-Zylinder-Einheit 21 gegenüberliegenden axialen Wellenende 61 der als Haspelwelle ausgebildeten Antriebswelle 11 benachbart angeordneten Drehzuführung 34 in die Fluidleitungsanordnung 29 gelangt. Wie **Fig. 1** zeigt, weist die Drehzuführung 34 zwei Druckanschlüsse 35, 36 auf, die wechselweise von einer Hydraulikpumpe mit Druck beaufschlagt werden können.

Die Drehzuführung 34 weist einen Stator 37 sowie einen im Stator gelagerten Rotor 38 auf, wobei sowohl der Druckanschluss 35 als auch der Druckanschluss 36 in jeweils eine in einer Innenwandung 39 des Stators ausgebildete Ringnut 40 bzw. 41 einmünden, derart, dass zwischen der Innenwandung 39 des Stators 37 und einer Außenwandung 42 des Rotors 38 Ringkanäle 43 und 44 ausgebildet sind.

Der Rotor 38 weist zwei axial zueinander versetzte Durchgangsbohrungen 45, 46 auf, die im vorliegenden Fall um 180° versetzt zueinander am Umfang des Rotors 38 angeordnet sind. Dabei ist die Anordnung der Durchgangsbohrungen 45, 46 so gewählt, dass die in der **Fig. 1** linke Durchgangsbohrung 45 eine Fluidverbindung zu dem Ringkanal 43 bildet, in den der Druckanschluss 35 einmündet, und die Durchgangsbohrung 46 eine Fluidverbindung zum Ringkanal 44 ausbildet, in den der Druckanschluss 36 einmündet.

Wie **Fig. 1** zeigt, ist der Rotor 38 hülsenartig ausgebildet mit einem axial offenen Rotorinnenraum 47, in dem zwei, im vorliegenden Fall als flexible Leitungen ausgebildete Rotorleitungsstücke 48, 49 angeordnet sind, wobei das Rotorleitungsstück 48 mit einem Rotoranschlussende 50 an die Durchgangsbohrung 45 und das Rotorleitungsstück 49 mit einem Rotoranschlussende 51 an die Durchgangsbohrung 46 angeschlossen ist. Wie ferner **Fig. 1** zeigt, ist das Rotorleitungsstück 48 über ein Verbraucheranschlussende 52 und eine hier als Schraubverbindung 53 ausgeführte lösbare Verbindung an das Kanalrohr 30 der als Haspelwelle ausgebildeten Abtriebswelle 11 angeschlossen und das Rohrleitungsstück 49 mit einem Verbraucheranschlussende 54 und eine, hier ebenfalls als Schraubverbindung 55 lösbar ausgebildete Verbindung an den Ringkanal 31 angeschlossen.

Wie aus dem Vorstehenden deutlich wird, wird durch die Rotorleitungsstücke 48, 49 eine Hydraulikverbindung zwischen externen, hier nicht näher dargestellten, an die Druckanschlüsse 35, 36 der Drehzuführung 34 angeschlossenen Hydraulikleitungen und den durch das Kanalrohr 30 und den Ringkanal 31 innerhalb der Abtriebswelle 11 ausgebildeten internen Hydraulikleitungen ermöglicht, so dass eine über die externen Hydraulikleitungen an die Drehzuführung 34 angeschlossene Hydraulikpumpe eine Druckbeaufschlagung des Kolbens 22 der Kolben-Zylindereinheit 21 ermöglicht. Dabei bewirkt eine Druckbeaufschlagung einer ersten Kolbenfläche 73 des Kolbens 22 über das Kanalrohr 30 eine Bewegung des Kolbens 22 und somit eine entsprechende Bewegung des Mitnehmers 23 nach rechts und eine Druckbeaufschlagung einer Gegenkolbenfläche 74 über den Ringkanal 31 eine Bewegung des Kolbens 22 und somit des Mitnehmers 23 nach links.

Wie **Fig. 1** zu entnehmen ist, bildet die Drehzuführung 34 einen Bestandteil der Wellenkupplung 57zwischen der Antriebswelle 56 und der hier als Haspelwelle ausgebildeten Abtriebswelle 11, derart, dass der Rotor 38 ein Verbindungsstück zwischen zwei Kupplungshälften 58 und 59 der Wellenkupplung 57 ausbildet und eine Drehmomentübertragung zwischen den Kupplungshälften 58 und 59 ermöglicht. Die Kupplungshälften 58, 59 können abweichend von der Darstellung in **Fig. 1** unmittelbar mit Wellenenden 60, 61 der Antriebswelle 56 und der Abtriebswelle 11 zusammenwirken, oder, wie in **Fig. 1** dargestellt, mittels auf den Wellenenden 60, 61 angeordneten Wellennaben 62, 63 zur Drehmomentübertragung dienen.

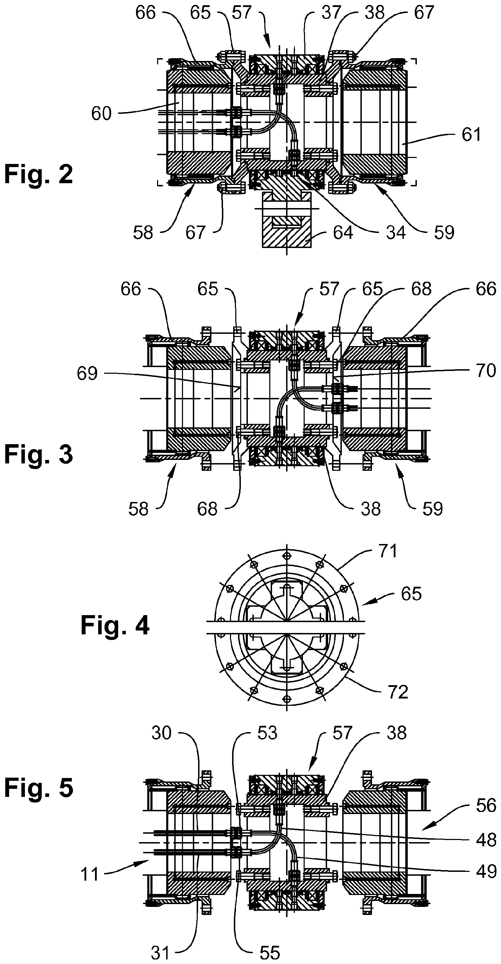

Wie insbesondere die **Fig. 1** und **2** zeigen, ist der den Rotor 38 aufnehmende Stator 37 mit einer Drehmomentstütze 64 versehen, die lösbar mit dem Stator 37 verbunden ist, um eine Demontage der Drehzuführung 34 zu ermöglichen. Zur Demontage der Drehzuführung 34, die beispielsweise notwendig werden kann, um Wartungsarbeiten an dem Haspeldorn 10 vornehmen zu können, ist darüber hinaus der Rotor 38 lösbar mit den Kupplungshälften 58, 59 verbunden. Hierzu ist bei dem dargestellten Ausführungsbeispiel, wie insbesondere aus **Fig. 2 und 3** ersichtlich, jede Kupplungshälfte 58, 59 aus einem Flanschteil 65 und einem Hülsenteil 66 zusammengesetzt, die über Schraubverbindungen 67 lösbar miteinander verbunden sind, so dass, wie **Fig. 3** zeigt, nach Lösen der Schraubverbindungen 67 die Hülsenteile 66 der Kupplungshälften 58, 59 in axialer Richtung von den Flanschteilen 65 entfernt werden können, so dass ein radialer Zugriff auf Schraubverbindungen 68 möglich wird, mit denen die Flanschteile 65 an Stirnseiten 69, 70 des Rotors 38 befestigt sind.

Wie **Fig. 4** zeigt, sind die Flanschteile 65 aus zwei radial trennbaren und lösbar miteinander verbundenen Flanschsegmenten 71, 72 gebildet, die, wie aus **Fig. 3** ersichtlich, über die Schraubverbindungen 68 so in ihrer Relativanordnung am Rotor 38 fixiert werden können, dass sie in Kombination miteinander den jeweiligen Flanschteil 65 ausbilden.

Ausgehend von der in **Fig. 3** dargestellten Konfiguration der Wellenkupplung 57 mit von den Flanschteilen 65 axial entfernten Hülsenteilen 66 der Kupplungshälften 58, 59 können nach Lösen der Schraubverbindungen 68, mit denen die Flanschsegmente 71, 72 an den Stirnseiten 69, 70 des Rotors 38 befestigt sind, die Flanschsegmente 71, 72 in radialer Richtung von der Drehzuführung 34 entfernt werden, so dass, wie in **Fig. 5** dargestellt, nunmehr ein radialer Zugriff auf die Schraubverbindungen 53, 55 möglich ist, über die die Rotorleitungsstücke 48, 49 mit dem Kanalrohr 30 und dem Ringkanal 31, die die internen Hydraulikleitungen der durch die Haspelwelle gebildeten Abtriebswelle 11 ausbilden, um die Drehzuführung 34 aus ihrer koaxialen Anordnung mit der Abtriebswelle 11 und der Antriebswelle 56 in radialer Richtung zu entfernen.

## Patentansprüche

1. Wellenkupplung (57) zur Übertragung eines Drehmoments von einer Antriebswelle (56) auf eine Abtriebswelle (11), wobei die Abtriebswelle (11) zumindest einen hydraulischen Verbraucher aufweist, der über eine Drehzuführung (34) mit Hydraulikflüssigkeit versorgt wird, wobei ein Stator (37) der Drehzuführung (34) zumindest einen Druckanschluss (35, 36) zur Verbindung mit einer externen Hydraulikleitung aufweist und ein Rotor (38) der Drehzuführung (34) zumindest einen Anschluss für eine innerhalb der Abtriebswelle (11) ausgebildete Fluidleitungsanordnung (29) zur Verbindung mit dem Verbraucher aufweist, und zur Verbindung der externen Hydraulikleitung mit der Fluidleitungsanordnung (29) zwischen dem Stator (37) und dem Rotor (38) zumindest ein Ringkanal (43, 44) ausgebildet ist,
**dadurch gekennzeichnet,**
**dass** der Rotor (38) der Drehzuführung (34) einen Bestandteil der Wellenkupplung (57) ausbildet.

2. Wellenkupplung nach Anspruch 1,
**dadurch gekennzeichnet,**
**dass** der Rotor (38) ein Verbindungsstück zwischen einer ersten, mit der Antriebswelle (56) verbundenen Kupplungshälfte (59) und einer zweiten, mit der Abtriebswelle (11) verbundenen Kupplungshälfte (58) bildet.

3. Wellenkupplung nach Anspruch 1 oder 2,
**dadurch gekennzeichnet,**
**dass** der Rotor (38) lösbar mit den Kupplungshälften (58, 59) verbunden ist.

4. Wellenkupplung nach einem der vorangehenden Ansprüche,
**dadurch gekennzeichnet,**
**dass** die Kupplungshälften (58, 59) jeweils ein Flanschteil (65) zur Verbindung mit dem Rotor (38) und ein Hülsenteil (66) zur Verbindung mit der Antriebswelle (56) beziehungsweise der Abtriebswelle (11) aufweisen.

5. Wellenkupplung nach Anspruch 4,
**dadurch gekennzeichnet,**
**dass** die Hülsenteile (66) mit einer Innenverzahnung versehen sind, die zur Drehmomentübertragung mit einer Außenverzahnung einer auf der Abtriebswelle (11) beziehungsweise der Antriebswelle (56) angeordneten Wellennabe (62, 63) zusammenwirkt.

6. Wellenkupplung nach Anspruch 4 oder 5,
**dadurch gekennzeichnet,**
**dass** die Flanschteile (65) und die Hülsenteile (66) lösbar miteinander verbunden sind.

7. Wellenkupplung nach Anspruch 5 oder 6,
**dadurch gekennzeichnet,**
**dass** die Flanschteile (65) mindestens zwei radial trennbare und lösbar miteinander verbundene Flanschsegmente (71, 72) aufweisen.

8. Wellenkupplung nach einem der vorangehenden Ansprüche,
**dadurch gekennzeichnet,**
**dass** der Rotor (38) zur Herstellung einer Hydraulikverbindung mit dem in der Abtriebswelle (11) angeordneten Verbraucher zumindest ein Rotorleitungsstück (48, 49) aufweist, das an die innerhalb der Abtriebswelle (11) ausgebildete Fluidleitungsanordnung (29) angeschlossen ist.

9. Wellenkupplung nach Anspruch 8,
**dadurch gekennzeichnet,**
**dass** das Rotorleitungsstück (48, 49) als flexible Leitung ausgebildet sind.

10. Wellenkupplung nach einem der vorangehenden Ansprüche,
**dadurch gekennzeichnet,**
**dass** der Rotor (38) als Rotorhülse ausgebildet ist.

11. Antriebsstrang (75) für einen Haspel zum Aufwickeln und Abwickeln von bandförmigem Material auf einen mittels einer Antriebswelle (56) antreibbaren Haspeldorn (10), der zur radial vorgespannten Aufnahme eines Coils mit Spreizsegmenten (12) versehen ist, die auf ihrer Innenseite mit einer Keilflächenanordnung (16) versehen sind und auf Spreizleisten (15) angeordnet sind, die auf ihrer Außenseite mit einer Keilflächenanordnung (19) versehen ist, wobei die Spreizleisten (15) radial zwischen den Spreizsegmenten (12) und einer von der Abtriebswelle (11) ausgebildeten Haspelwelle angeordnet und mittels einer in der Abtriebswelle (11) angeordneten Kolben-Zylinder-Einheit (21) axial gegenüber den Spreizsegmenten (12) und der Abtriebswelle (11) verschiebbar sind, wobei ein Kolben (22) der Kolben-Zylinder-Einheit (21) zur Spreizung der Spreizsegmente (12) über eine in der Haspelwelle (11) ausgebildete axiale Fluidleitungsanordnung(29) mit einem Druckmittel beaufschlagbar ist, wobei der Antriebsstrang (75) eine zwischen der Antriebswelle (57) und der als Abtriebswelle (11) ausgebildeten Haspelwelle eine Wellenkupplung (57) nach einem oder mehreren der Ansprüche 1 bis 10 aufweist.

## Claims

1. A shaft coupling (57) for transmitting a torque from a drive shaft (56) to a driven shaft (11), the driven shaft (11) comprising at least one hydraulic user which is supplied with hydraulic fluid via a rotary supply (34), a stator (37) of the rotary supply (34) comprising at least one pressure connection (35, 36) for being connected to an external hydraulic pipe, and a rotor (38) of the rotary supply (34) comprising at least one connection for a fluid pipe arrangement (29) which is realized within the driven shaft (11) and is designed for being connected to the user, and at least one annular channel (43, 44) being formed for connecting the external hydraulic pipe to the fluid pipe arrangement (29) between the stator (37) and the rotor (38),
**characterized in that**
the rotor (38) of the rotary supply (34) forms a component of the shaft coupling (57).

2. The shaft coupling according to claim 1,
**characterized in that**
the rotor (38) forms a connection piece between a first coupling half (59) connected to the drive shaft (56) and a second coupling half (58) connected to the driven shaft (11).

3. The shaft coupling according to claim 1 or 2,
**characterized in that**
the rotor (38) is detachably connected to the coupling halves (58, 59).

4. The shaft coupling according to any one of the preceding claims,
**characterized in that**
the coupling halves (58, 59) each comprise a flange part (65) for being connected to the rotor (38) and a sleeve part (66) for being connected to the drive shaft (56) or the driven shaft (11).

5. The shaft coupling according to claim 4,
**characterized in that**
the sleeve parts (66) are provided with inner teeths which interact with outer teeths of a shaft hub (62, 63) disposed on the driven shaft (11) or the drive shaft (56) for transferring torque.

6. The shaft coupling according to claim 4 or 5,
**characterized in that**
the flange parts (65) and the sleeve parts (66) are detachably connected to each other.

7. The shaft coupling according to claim 5 or 6,
**characterized in that**
the flange parts (65) comprise at least two flange segments (71, 72) which are radially separable and detachably connected to each other.

8. The shaft coupling according to any one of the preceding claims,
**characterized in that**
the rotor (38) comprises at least one rotor pipe piece (48, 49) for producing a hydraulic connection to the user disposed in the driven shaft (11), the rotor pipe piece (48, 49) being connected to the fluid pipe arrangement (29) formed within the driven shaft (11).

9. The shaft coupling according to claim 8,
**characterized in that**
the rotor pipe piece (48, 49) is a flexible pipe.

10. The shaft coupling according to any one of the preceding claims,
**characterized in that**
the rotor (38) is a rotor sleeve.

11. A drive strand (75) for a winder for winding and unwinding bandshaped material onto a winder arbor (10) which is driven by means of a drive shaft (56) and is provided with spreading segments (12) for a radially prestressed reception of a coil, the spreading segments (12) being provided with a wedge surface arrangement (16) on its inner side and being disposed on spreaders (15) provided with a wedge surface arrangement (19) on its outer side, the spreaders (15) being disposed radially between the spreader segments (12) and a winder shaft formed by the driven shaft (11) and being axially displaceable with respect to the spreading segments (12) and the driven shaft (11) by means of a piston-cylinder-unit (21) disposed in the driven shaft (11), a piston (22) of the piston-cylinder-unit (21) being pressurized with a pressurizing agent via an axial fluid pipe arrangement (29) formed in the winder shaft (11) in order to spread the spreading segments (12), the drive strand (75) comprising a shaft coupling (57) according to one or more of the claims 1 to 10 between the drive shaft (5) and the winder shaft realized as a driven shaft (11).

## Revendications

1. Dispositif (57) d'embrayage d'arbre pour la transmission d'un torque d'un arbre (56) d'entrée à un arbre (11) de sortie, l'arbre (11) de sortie comprenant au moins un récepteur hydraulique qui est alimenté en fluide hydraulique par une amenée (34) rotative, un stator (37) de l'amenée (34) rotative comprenant au moins une connexion (35, 36) de pression pour être relié à un tuyau hydraulique externe, un rotor (38) de l'amenée (34) rotative comprenant au moins une connexion pour un assemblage (29) de tuyau de fluide formé dans l'arbre (11) de sortie pour être relié au récepteur, au moins un canal (43, 44) annulaire étant formé entre le stator (37) et le rotor (38) pour relier le tuyau hydraulique externe à l'assemblage (29) de tuyau de fluide,
**caractérisé en ce que**
le rotor (38) de l'amenée (34) rotative est réalisé comme un composant du dispositif (57) d'embrayage d'arbre.

2. Dispositif d'embrayage d'arbre selon la revendication 1,
**caractérisé en ce que**
le rotor (38) forme une pièce de connexion entre une première moitié (59) de dispositif d'embrayage reliée à l'arbre (56) d'entrée et une deuxième moitié (58) de dispositif d'embrayage reliée à l'arbre (11) de sortie.

3. Dispositif d'embrayage d'arbre selon la revendication 1 ou 2,
**caractérisé en ce que**
le rotor (38) est relié aux moitiés (58, 59) de dispositif d'embrayage de manière détachable.

4. Dispositif d'embrayage d'arbre selon l'une quelconque des revendications précédentes,
**caractérisé en ce que**
les moitiés (58, 59) de dispositif d'embrayage comprennent chacun une pièce (65) de bride pour être reliées au rotor (38) et une pièce (66) de douille pour être reliées à l'arbre (56) d'entrée ou à l'arbre (11) de sortie.

5. Dispositif d'embrayage d'arbre selon la revendication 4,
**caractérisé en ce que**
les pièces (66) de douille sont pourvues des dents intérieures qui interagissent avec des dents extérieures d'un moyeu (62, 63) d'arbre disposées sur l'arbre (11) de sortie ou l'arbre (56) d'entrée pour la transmission du torque.

6. Dispositif d'embrayage d'arbre selon la revendication 4 ou 5,
**caractérisé en ce que**
les pièces (65) de bride et les pièces (66) de douille sont reliées les unes avec les autres de manière détachable.

7. Dispositif d'embrayage d'arbre selon la revendication 5 ou 6,
**caractérisé en ce que**
les pièces (65) de bride comprennent au moins deux segments (71, 72) de bride reliant les uns aux autres de manière séparable radialement et détachable.

8. Dispositif d'embrayage d'arbre selon l'une quelconque des revendications précédentes,
**caractérisé en ce que**
le rotor (38) comprend au moins une pièce (48, 49) de tuyau de rotor pour établir une connexion hydraulique à l'utilisateur disposé dans l'arbre (11) de sortie, la pièce (48, 49) de tuyau de rotor étant reliée à l'assemblage (29) de tuyau de fluide formé dans l'arbre (11) de sortie.

9. Dispositif d'embrayage d'arbre selon la revendication 8,
**caractérisé en ce que**
la pièce (48, 49) de tuyau de rotor est réalisé en tant que tuyau flexible.

10. Dispositif d'embrayage d'arbre selon l'une quelconque des revendications précédentes,
**caractérisé en ce que**
le rotor (38) est réalisé en tant que douille de rotor.

11. Chaîne (75) cinématique pour un enrouleur pour enrouler et dérouler de matériau en forme de bande sur un mandrin (10) d'enrouleur qui est entraîné au moyen d'un arbre (56) d'entrée et est pourvu des segments (12) d'écartement pour un logement pretensionné radialement d'un coil, les segments (12) d'écartement étant pourvus d'un assemblage (16) de surface de coin sur son intérieure et étant disposés sur des baguettes (15) d'écartement pourvues d'un assemblage (19) de surface de coin sur son extérieure, les baguettes (15) d'écartement étant disposées radialement entre les segments (12) d'écartement et un arbre d'enrouleur formé par l'arbre (11) de sortie et étant déplacées axialement par rapport aux segments (12) d'écartement et l'arbre (11) de sortie au moyen d'une unité (21) de piston et cylindre disposée dans l'arbre (11) de sortie, un piston (22) de l'unité (21) de piston et cylindre étant pressurisé avec un moyen de pression par un assemblage (29) de tuyau de fluide axiale formé dans l'arbre (11) d'enrouleur pour écarter les segments (12) d'écartement, la chaîne (75) cinématique comprenant un dispositif (57) d'embrayage d'arbre selon l'une ou plusieurs des revendications 1 à 10 entre l'arbre (57) d'entrée et l'arbre d'enrouleur formé en tant qu'arbre (11) de sortie.
